(19) Europäisches Patentamt
European Patent Office
Office européen des brevets

(11) **EP 3 771 082 A1**

(12) **DEMANDE DE BREVET EUROPEEN**

(43) Date de publication:
**27.01.2021 Bulletin 2021/04**

(51) Int Cl.:
***H02M 3/156*** *(2006.01)*

(21) Numéro de dépôt: **20186613.4**

(22) Date de dépôt: **20.07.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.07.2019 FR 1908469**

(71) Demandeur: **STMicroelectronics (Rousset) SAS 13790 Rousset (FR)**

(72) Inventeurs:
• **CUENCA, Michel 13240 SEPTEMES LES VALLONS (FR)**
• **ORTET, Sebastien 13100 BEAURECEUIL (FR)**

(74) Mandataire: **Cabinet Beaumont 4, Place Robert Schuman B.P. 1529 38025 Grenoble Cedex 1 (FR)**

(54) **ALIMENTATION A DECOUPAGE**

(57) La présente description concerne une alimentation à découpage (1) comprenant un circuit de génération d'une rampe de tension (16) comprenant, en parallèle, au moins trois condensateurs sélectionnables en fonction de la valeur d'une tension d'alimentation interne (VDD) de l'alimentation à découpage.

# Fig. 2

EP 3 771 082 A1

**Description**

Domaine technique

La présente description concerne de façon générale les systèmes électroniques, et, en particulier, les circuits d'alimentation de ces systèmes. La description concerne plus particulièrement les alimentations à découpage.

Technique antérieure

Il existe plusieurs types de circuits d'alimentation électrique permettant de délivrer un couple courant/tension à un circuit, ou dispositif ou système électronique, ou plus généralement à une charge. Les alimentations linéaires et les alimentations à découpage sont des exemples de circuits d'alimentation.

Une alimentation à découpage est un circuit d'alimentation adapté à fournir une tension continue, généralement à partir d'une autre tension continue. Les alimentations à découpage sont généralement des convertisseurs DC/DC, mais certaines alimentations à découpage peuvent comprendre un étage de redressement leur permettant de prendre en entrée une tension alternative, par exemple, le secteur.

Il serait souhaitable de pouvoir améliorer au moins en partie certains aspects des alimentations à découpage connues.

Résumé de l'invention

Il existe un besoin dans la technique pour des alimentations à découpage plus performantes.

Il existe un besoin dans la technique pour des alimentations à découpage consommant moins d'énergie.

Un mode de réalisation pallie tout ou partie des inconvénients des alimentations à découpage connues.

Un mode de réalisation prévoit une alimentation à découpage comprenant un circuit de génération d'une rampe de tension comprenant, en parallèle, au moins trois condensateurs sélectionnables en fonction de la valeur d'une tension d'alimentation interne de l'alimentation à découpage.

Selon un mode de réalisation, le circuit de génération d'une rampe de courant est mis en oeuvre pendant un mode de fonctionnement basse consommation de l'alimentation à découpage.

Selon un mode de réalisation, le mode de fonctionnement à basse consommation est un mode de fonctionnement en modulation de fréquence d'impulsions.

Selon un mode de réalisation, le circuit de génération d'une rampe de courant est mis en oeuvre pendant une phase de fonctionnement haute consommation de l'alimentation à découpage.

Selon un mode de réalisation, le mode de fonctionnement haute consommation est un mode de fonctionnement en modulation de largeur d'impulsions.

Selon un mode de réalisation, la tension d'alimentation interne a une valeur moyenne égale à une tension d'entrée de l'alimentation à découpage.

Selon un mode de réalisation, lesdits au moins trois condensateurs sélectionnables sont sélectionnables par l'intermédiaire d'interrupteurs.

Un autre mode de réalisation prévoit un procédé de fonctionnement d'une alimentation à découpage dans lequel la pente d'une rampe de tension fournie par un circuit de génération d'une rampe de tension est modifiée en fonction de la valeur d'une tension d'alimentation interne de l'alimentation à découpage.

Selon un mode de réalisation, ladite pente est augmentée quand la tension d'alimentation interne est diminuée.

Selon un mode de réalisation, ladite pente est diminuée quand la tension d'alimentation interne est augmentée.

Selon un mode de réalisation, ladite pente est modifiée en ajustant une capacité dudit circuit de génération d'une rampe de tension.

Selon un mode de réalisation, le procédé est utilisé pendant un mode basse consommation de l'alimentation à découpage.

Selon un mode de réalisation, le procédé est utilisé pendant un mode haute consommation de l'alimentation à découpage.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, schématiquement et sous forme de blocs, une alimentation à découpage ;

la figure 2 représente, schématiquement et sous forme de blocs, un mode de réalisation d'une alimentation à découpage pendant une phase de basse consommation ;

la figure 3 représente, schématiquement et sous forme de blocs, un mode de réalisation d'une alimentation à découpage pendant une phase de haute consommation ;

la figure 4 représente, schématiquement et sous forme de blocs, un mode de réalisation d'un circuit générateur de rampe des parties de l'alimentation à découpage des figures 2 et 3 ; et

la figure 5 représente, schématiquement et sous forme de blocs, un exemple de circuit de commande du circuit de la figure 4.

Description des modes de réalisation

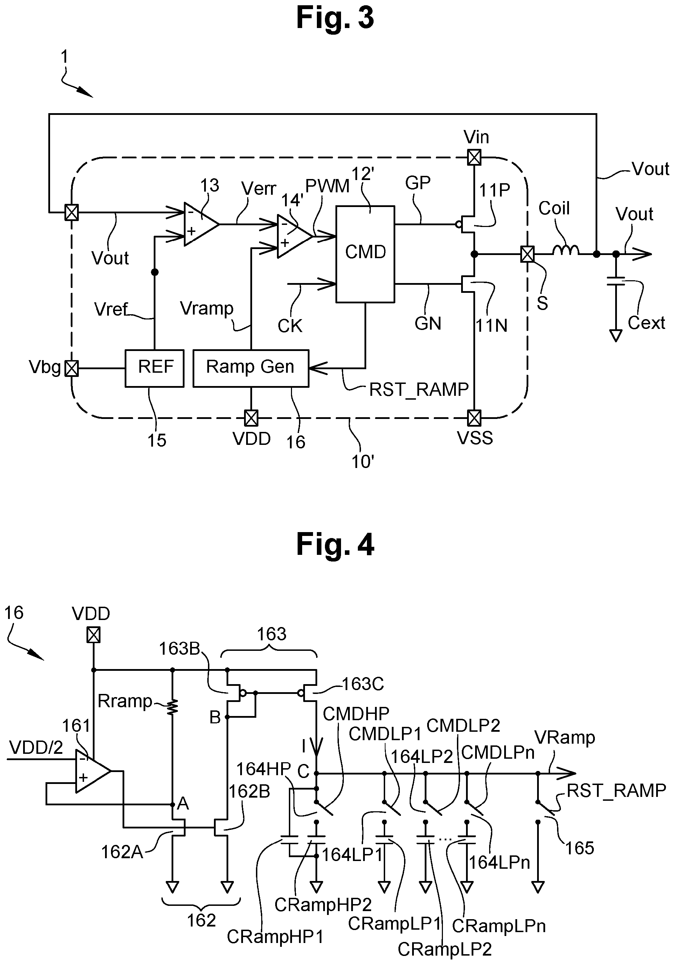

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.
Par souci de clarté, seuls les étapes et éléments utiles à la compréhension des modes de réalisation décrits ont été représentés et sont détaillés.
Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.
Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.
Sauf précision contraire, les expressions "environ", "approximativement", "sensiblement", et "de l'ordre de" signifient à 10 % près, de préférence à 5 % près.

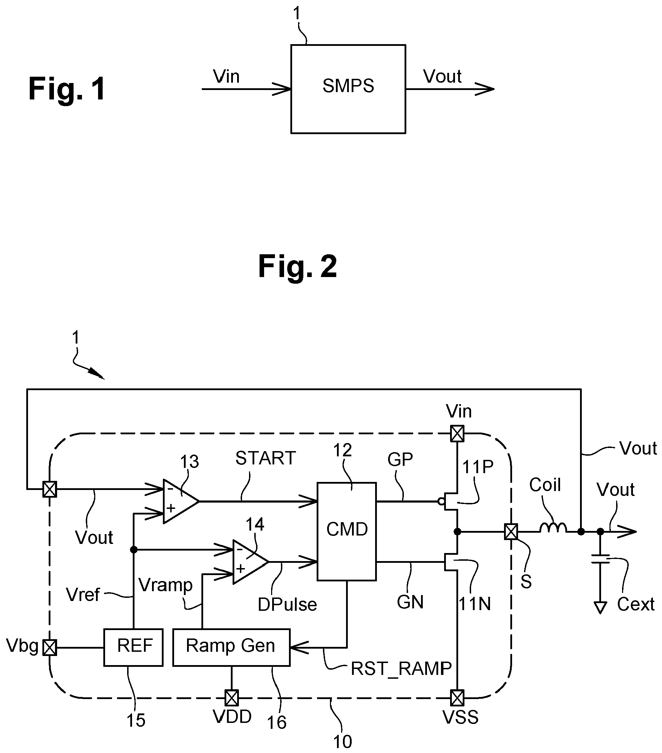

La figure 1 représente, très schématiquement et sous forme de bloc, une alimentation à découpage 1 (SMPS).
L'alimentation à découpage 1 est un circuit d'alimentation adapté à fournir, à partir d'une tension continue Vin, une nouvelle tension continue Vout. L'alimentation à découpage 1 est adaptée à alimenter une charge reliée à sa sortie, c'est-à-dire recevant la tension Vout. Pour cela, l'alimentation à découpage dispose de plusieurs modes de fonctionnement différents en fonction de la valeur de la tension d'entrée à convertir. L'alimentation à découpage 1 comprend, par exemple, au moins deux modes de fonctionnement.
Un premier mode de fonctionnement est un mode de fonctionnement à basse puissance (Low Power), ou mode de fonctionnement à basse consommation, dans lequel l'alimentation à découpage fonctionne en modulation de fréquence d'impulsion (Pulse Frequency Modulation, PFM). Ce mode de fonctionnement est utilisé quand une charge connectée en sortie de l'alimentation à découpage 1 demande un courant peu élevé, par exemple un courant inférieur à 30 mA. Ce mode de fonctionnement est décrit en relation avec la figure 2.
Un deuxième mode de fonctionnement est un mode de fonctionnement haute consommation, ou pleine puissance, (High Power), dans lequel l'alimentation à découpage fonctionne en modulation de largeur d'impulsion (Pulse Width Modulation, PWM). Ce mode de fonctionnement est utilisé quand la charge connectée en sortie de l'alimentation à découpage 1 demande un courant élevé, par exemple un courant supérieur à 30 mA. Ce mode de fonctionnement est décrit en relation avec la figure 3.
L'alimentation à découpage 1 peut comprendre en outre d'autres modes de fonctionnement, comme par exemple un mode de conduction forcée, ou mode By Pass.
La figure 2 représente, schématiquement et sous forme de blocs, une partie de l'alimentation à découpage 1 comprenant une inductance Coil, un condensateur Cext, et une architecture de commande 10 quand l'alimentation à découpage 1 est dans un mode de fonctionnement basse consommation.
L'inductance Coil a une de ses bornes reliée, de préférence connectée, à un noeud de sortie de l'architecture 10. L'autre borne de l'inductance Coil fournit la tension de sortie Vout de l'alimentation à découpage 1.
Le condensateur Cext a une électrode reliée, de préférence connectée, à la borne de l'inductance Coil fournissant la tension de sortie Vout. L'autre électrode du condensateur Cext est reliée, de préférence connectée, à un noeud de référence, par exemple un noeud recevant la masse.
L'architecture de commande 10 comprend un transistor MOS à canal N 11N et un transistor MOS à canal P 11P. Les transistors 11P et 11N sont connectés en série. Plus particulièrement, le drain du transistor 11N est relié, de préférence connecté, au drain du transistor 11P. La source du transistor 11P est reliée, de préférence connectée, à une borne recevant la tension d'entrée Vin. La source du transistor 11N est reliée, de préférence connectée, à une borne recevant une tension d'alimentation basse VSS. La tension d'alimentation basse VSS est, par exemple, une tension de référence comme la masse. Le noeud de sortie S de l'architecture 10 est défini par le point milieu entre les transistors 11N et 11P. Autrement dit, le noeud S est relié, de préférence connectée, aux drains des transistors 11N et 11P.

L'architecture 10 comprend, en outre, une machine d'état 12 (CMD) adaptée à fournir des signaux GP et GN permettant de commander les grilles des transistors 11P et 11N. La machine d'état 12 fournit, en outre, un signal de réinitialisation RST_RAMP. La machine d'état 12 reçoit, en entrée, des signaux START et DPulse.

L'architecture 10 comprend, en outre, un circuit comparateur 13 adapté à comparer la tension de sortie Vout de l'alimentation à découpage 1 avec une tension de référence Vref. Le circuit comparateur 13 fournit, en sortie, le signal START.

L'architecture 10 comprend, en outre, un circuit comparateur 14 adapté à comparer la tension de référence Vref et une tension de rampe Vramp. Le circuit comparateur 14 fournit, en sortie, le signal DPulse.

L'architecture 10 comprend, en outre, un circuit 15 de génération de la tension de référence Vref. Le circuit 15 reçoit, en entrée, une tension Vbg, et fournit, en sortie, la tension Vref. La tension Vbg est une tension de référence générale, de l'alimentation à découpage 1, qui varie peu en fonction de la température. La tension Vbg est, par exemple, une tension de bande interdite, (bandgap voltage).

L'architecture 10 comprend, en outre, un circuit de génération d'une rampe de tension 16, ou circuit générateur de rampe. Le circuit 16 reçoit, en entrée le signal RST_RAMP, et une tension d'alimentation VDD interne à l'alimentation à découpage 1. La tension d'alimentation interne VDD a la même valeur moyenne que la tension d'entrée Vin, mais est généralement moins bruitée. Selon une variante, la tension d'alimentation interne VDD est égale à la tension d'entrée Vin. Le circuit 16 fournit, en sortie, la tension Vramp. Le circuit 16 est détaillé en relation avec la figure 4.

Un mode de fonctionnement de l'alimentation à découpage 1 dans le mode basse consommation est le suivant.

Pendant le mode basse consommation, le condensateur Cext est chargé et déchargé périodiquement avec une quantité d'énergie fixée. La fréquence de chargement et de déchargement du condensateur Cext, ou la durée d'une période de chargement et de déchargement, est variable et est commandée par le signal START. La quantité d'énergie envoyée au condensateur Cext est commandée par le signal DPulse. Une période de chargement et de déchargement comprend une première phase de chargement du condensateur Cext et une deuxième phase de déchargement du condensateur Cext. Pendant une phase de chargement, le transistor 11P est passant et le transistor 11N est ouvert. Pendant une phase de déchargement, le transistor 11N est passant et le transistor 11P est ouvert.

Plus particulièrement, le condensateur Cext se décharge à cause d'une charge, connectée en sortie de l'alimentation à découpage 1, consomme de l'énergie. Dès que l'énergie stockée par le condensateur Cext passe sous un seuil minimum, le signal START commande l'ouverture du transistor 11P, et la fermeture du transistor 11N, pour charger le condensateur Cext avec la tension d'entrée Vin via l'inductance Coil. Encore plus particulièrement, le signal START détecte que le condensateur ne stocke plus assez d'énergie dès que la tension de sortie Vout est inférieure à la tension de référence Vref. La tension Vref correspond à la tension aux bornes du condensateur Cext quand il stocke un seuil minimum d'énergie. Plus la charge en sortie de l'alimentation à découpage 1 consomme d'énergie, plus la fréquence des impulsions d'énergie envoyée au condensateur sera élevée.

Pour fixer la quantité d'énergie envoyée au condensateur Cext à chaque nouvelle période de chargement, le signal DPulse définit la durée TON pendant laquelle le transistor 11P est passant pendant une phase de chargement.

La figure 3 représente, schématiquement et sous forme de blocs, une partie de l'alimentation à découpage 1 comprenant l'inductance Coil, le condensateur Cext, et une architecture de commande 10' de l'alimentation à découpage 1 quand elle fonctionne dans un mode de fonctionnement haute consommation.

L'architecture 10' comprend des éléments communs avec l'architecture 10 décrite en relation avec la figure 2. Ces éléments ne seront pas détaillés de nouveau ci-après.

Dans l'architecture 10', les signaux de commande GP et GN et le signal RST_RAMP sont générés par une machine d'état 12' (CMD) recevant en entrée un signal PWM et un signal d'horloge CK.

Dans l'architecture 10', le circuit comparateur 13 fournit en sortie une tension d'erreur Verr à une entrée d'un circuit comparateur 14' (remplaçant le circuit comparateur 14). Le circuit comparateur 14' reçoit, sur une deuxième entrée, la tension Vramp fournie par le circuit générateur de rampe 16. Le circuit comparateur 14' fournit, en sortie, le signal PWM.

Un mode de fonctionnement de l'alimentation à découpage 1 pendant un mode haute consommation est le suivant.

Pendant un mode haute consommation, le condensateur Cext est chargé et déchargé périodiquement avec une quantité d'énergie variable. La durée d'une période comprenant une phase de chargement et une phase de déchargement est constante et est fixée par le signal d'horloge CK. Pendant une phase de chargement, le transistor 11P est passant et le transistor 11N est ouvert. Pendant une phase de déchargement, le transistor 11N est passant et le transistor 11P est ouvert. Les durées d'une phase de chargement et d'une phase de déchargement sont variables, et commandées par le signal PWM. Autrement, le rapport cyclique de l'ouverture et de la fermeture des transistors est ajusté par le signal PWM.

Le signal PWM est obtenu en comparant la tension d'erreur Verr, représentant la différence entre la tension de sortie Vout et la tension de référence Vref, et la tension Vramp fournit par le circuit 16. Dès que l'erreur est trop élevée, le signal PWM commande une phase de chargement du condensateur Cext.

La figure 4 représente, plus en détail, le circuit de génération d'une rampe de tension 16 des architectures 10 et 10' décrits en relation avec les figures 2 et 3.

Le circuit 16 comprend une résistance Rramp recevant sur une de ses bornes la tension d'alimentation interne VDD. La deuxième borne de la résistance Rramp est reliée, de préférence connectée, à un noeud A. La résistance Rramp a une valeur de résistance notée Rramp.

Le circuit 16 comprend, en outre, un amplificateur opérationnel 161 ayant une première entrée (+) reliée, de préférence connectée, au noeud A, et une deuxième entrée (-) recevant la tension d'alimentation VDD divisée par deux (VDD/2). L'amplificateur opérationnel 161 est alimenté par la tension d'alimentation interne VDD. Une sortie de l'amplificateur opérationnel 161 commande un circuit dit miroir de courant 162 du circuit 16.

Le circuit 162 comprend deux transistors MOS de type N 162A et 162B dont les grilles sont reliées, de préférence connectées, l'une à l'autre et à la sortie de l'amplificateur opérationnel 161. Le transistor 162A a son drain relié, de préférence connecté, au noeud A, et a sa source reliée, de préférence connectée, à un noeud de référence, par exemple, un noeud recevant la masse. Le transistor 162B a son drain relié, de préférence connecté, à un noeud B, et sa source reliée, de préférence connectée, à un noeud de référence, par exemple, un noeud recevant la masse.

Le circuit 16 comprend, en outre, un deuxième circuit dit de miroir de courant 163. Le circuit 163 comprend deux transistors MOS de type P 163B et 163C. Les grilles des transistors 163B et 163C sont reliées, de préférence connectées, entre elles et au noeud B. Les sources des transistors 163B et 163C sont reliées, de préférence connectées, entre elles et reçoivent la tension d'alimentation interne VDD. Le drain du transistor 163B est relié, de préférence connecté, au noeud B. Le drain du transistor 163C est relié, de préférence connecté, à un noeud C fournissant la tension Vramp. Autrement dit, le noeud C est un noeud de sortie du circuit 16.

Le circuit 16 comprend, en outre, un condensateur CrampHP1. Une première électrode du condensateur CrampHP1 est reliée, de préférence connectée, au noeud C, et une deuxième électrode du condensateur CrampHP1 est reliée, de préférence connectée, à un noeud de référence, par exemple, un noeud recevant la masse.

Le circuit 16 comprend, en outre, un condensateur CrampHP2 sélectionnable par un interrupteur 164HP. Une première électrode du condensateur CrampHP2 est reliée, de préférence connectée, à une borne de l'interrupteur 164HP, et une deuxième électrode du condensateur CrampHP2 est reliée, de préférence connectée, à un noeud de référence, par exemple, un noeud recevant la masse. Une deuxième borne de l'interrupteur 164HP est reliée, de préférence connectée, au noeud C. L'interrupteur 164HP est commandé par un signal CMDHP.

Le circuit 16 comprend, en outre, n condensateurs CrampLP1, CrampLP2, ..., CrampLPn sélectionnables, respectivement, par des interrupteurs 164LP1, 164LP2, ..., 164LPn, n étant, de préférence, un nombre compris entre 2 et 8. Chaque condensateur CrampLPi, i variant de 1 à n, a une première électrode reliée, de préférence connectée, à une borne de l'interrupteur 164LPi qui lui est associé, et a une deuxième électrode reliée, de préférence connectée, à un noeud de référence, par exemple, un noeud recevant la masse. Une deuxième borne de l'interrupteur 164LPi est reliée, de préférence connectée, au noeud C. L'interrupteur 164LPi est commandé par un signal CMDLPi.

Le circuit 16 comprend, en outre, un interrupteur 165 reliant le noeud C et le noeud de référence, par exemple, un noeud recevant la masse. L'interrupteur 165 est commandé par le signal RST_RAMP.

Le fonctionnement du circuit 16 est le suivant. Le condensateur CrampHP1 et le ou les condensateurs CrampHP2, CrampLP1, CrampLP2, ..., CrampLPn sélectionnés sont chargés progressivement par un courant I. La tension Vramp évolue suivant une rampe de tension. Plus la capacité globale Cramp du condensateur CrampHP1 et des condensateurs CrampHP2, CrampLP1, CrampLP2, ..., CrampLPn sélectionnés est grande, plus la pente de la rampe suivie par Vramp est faible. L'ouverture de l'interrupteur 165 permet de remettre à zéro la tension Vramp.

Le signal DPulse décrit en relation avec la figure 2 est généré de la façon suivante. A chaque début de période de chargement du condensateur Cext, c'est-à-dire à l'ouverture du transistor 11P, la tension Vramp est à zéro. Pendant une période de chargement, la tension Vramp évolue suivant une rampe. Le circuit comparateur 14 compare la tension Vramp à la tension de référence Vref. Tant que la tension Vramp est inférieure à la tension de référence Vref, le signal DPulse commande la fermeture du transistor 11P et l'ouverture du transistor 11N, et le condensateur Cext se charge. Dès que la tension Vramp dépasse la tension Vref, le signal DPulse commande l'ouverture du transistor 11P et la fermeture du transistor 11N, et le condensateur Cext se décharge. Ainsi, la durée TON de chargement du condensateur Cext est définie par la durée nécessaire à la tension Vramp pour dépasser la tension Vref. La durée TON est définie par la formule suivante :

$$TON = 2 * Rramp * Cramp * \frac{Vout}{VDD}$$

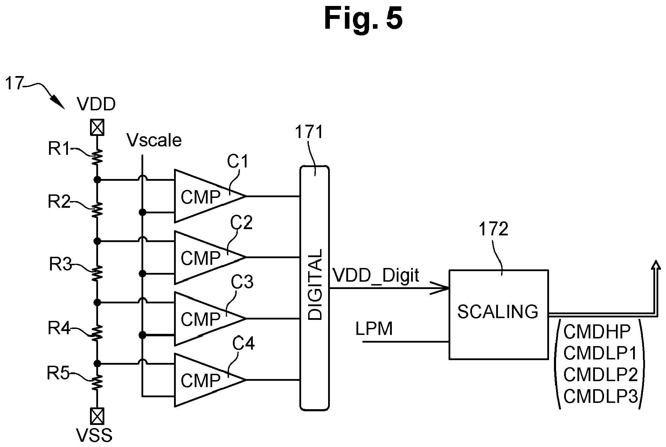

Les signaux CMDHP, CMDLP1 à CMDLPn sont générés par un circuit de commande 17 (non représenté en figure 4) dont un exemple de réalisation est décrit en relation avec la figure 5. Les états des signaux CMDHP, CMDLP1 à CMDLPn sont dépendants de la valeur de la tension d'alimentation interne VDD. Plus particulièrement, la tension VDD peut faire partie de plusieurs gammes de valeurs différentes, et en fonction de sa valeur certains signaux CMDHP, CMDLP1 à CMDLPn sont activés et d'autres non. En particulier, la capacité globale Cramp est augmentée quand la tension d'alimentation VDD diminue.

Un avantage de l'utilisation d'un circuit générateur d'une rampe de tension du type du circuit 16 est que la pente de la rampe de tension qu'il fournit en sortie est modulable en fonction d'une tension de consigne, ici la tension d'alimentation interne VDD.

Un avantage de l'utilisation d'un circuit 16 pendant un mode basse consommation de l'alimentation à découpage 1 est qu'il permet de réduire les pertes d'énergie dans l'inductance Coil. En effet, pendant une période de chargement du condensateur Cext, l'inductance Coil voit une tension égale à la différence entre la tension de sortie Vout et la tension d'entrée Vin, qui a la même valeur moyenne que la tension d'alimentation interne VDD. Ainsi, pendant une période de chargement, le courant Imax entrant dans l'inductance Coil est égale à :

$$ Imax = TON * \frac{VDD - Vout}{L} = 2 * Rramp * Cramp * \frac{Vout}{VDD} * \frac{VDD - Vout}{L} $$

dans lequel L est la valeur de l'inductance de l'inductance Coil.

Le courant Imax étant dépendant de la tension VDD, une méthode pour le diminuer et pour limiter les pertes d'énergie est de diminuer graduellement la capacité Cramp quand la tension VDD est augmentée. Ainsi les pertes sont limitées.

La figure 5 représente un exemple de circuit de commande 17, ou circuit générateur des signaux de commande CMDHP, et CMDLP1, ..., CMDLPn décrits en relation avec la figure 3. Le circuit 17 décrit ici est apte à être couplé avec un circuit 16 de la figure 3 comprenant trois condensateurs CrampLP1 à CrampLP3.

Le circuit 17 comprend, entre un noeud recevant la tension VDD et un noeud recevant la tension VSS, des résistances R1 à R5 en série. A titre d'exemple, les résistances R1 à R5 ont toutes des valeurs de résistance égales.

Le circuit 17 comprend, en outre, quatre circuits comparateurs C1 à C4 (CMP). Chaque circuit comparateur reçoit sur une de ses entrées une tension Vscale de comparaison. Les circuits comparateurs C1 à C4 reçoivent sur une deuxième entrée la tension présente sur un point milieu entre deux résistances R1 à R5. Plus particulièrement :

- le circuit C1 reçoit la tension du point milieu entre les résistances R1 et R2 ;
- le circuit C2 reçoit la tension du point milieu entre les résistances R2 et R3 ;
- le circuit C3 reçoit la tension du point milieu entre les résistances R3 et R4 ; et
- le circuit C4 reçoit la tension du point milieu entre les résistances R4 et R5.

Les sorties des circuits C1 à C4 sont envoyées dans un circuit de compilation 171 (DIGITAL), permettant de déterminer l'intervalle de valeurs dans lequel la valeur de la tension VDD est comprise. Le circuit de compilation fournit, en sortie, un signal numérique VDD_DIGIT comprenant les informations sur la gamme dans laquelle est comprise de la tension VDD.

Le circuit 17 comprend, en outre, un circuit de décodage 172 (SCALING) adapté à fournir, en sortie, les signaux de commande CMDHP, et CMDLP1, CMDLP2, et CMDLP3. Le circuit 172 reçoit, en entrée, le signal VDD_DIGIT et un signal LPM signifiant l'activation d'un mode basse consommation de l'alimentation à découpage 1. Le circuit 17 permet de fixer la valeur de la capacité globale Cramp décrite en relation avec la figure 4.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

**Revendications**

1.  Procédé de fonctionnement d'une alimentation à découpage (1) dans lequel la pente d'une rampe de tension fournie par un circuit de génération d'une rampe de tension (16) est modifiée par un circuit de commande adapté à ajuster une capacité (Cramp) dudit circuit de génération d'une rampe de tension en fonction de la valeur d'une tension d'alimentation (VDD) de l'alimentation à découpage (1).

**2.** Procédé selon la revendication 1, mis en oeuvre pendant un mode basse consommation de l'alimentation à découpage (1).

**3.** Procédé selon la revendication 2, dans lequel le mode de fonctionnement à basse consommation est un mode de fonctionnement en modulation de fréquence d'impulsions de l'alimentation à découpage (1).

**4.** Procédé selon l'une quelconque des revendications 1 à 3, mis en oeuvre pendant un mode haute consommation de l'alimentation à découpage (1).

**5.** Procédé selon la revendication 4, dans lequel le mode de fonctionnement haute consommation est un mode de fonctionnement en modulation de largeur d'impulsions.

**6.** Procédé selon l'une quelconque des revendications 1 à 5, dans lequel ladite pente est augmentée quand la tension d'alimentation interne est augmentée.

**7.** Procédé selon l'une quelconque des revendications 1 à 6, dans lequel ladite pente est diminuée quand la tension d'alimentation interne est diminuée.

**8.** Procédé selon l'une quelconque des revendications 1 à 7, dans lequel la tension d'alimentation (VDD) a une valeur moyenne égale à une tension d'entrée (Vin) de l'alimentation à découpage (1).

**9.** Alimentation à découpage (1) adapté à fonctionner d'après le procédé selon l'une quelconque des revendications 1 à 8.

**10.** Alimentation selon la revendication 9, comprenant un circuit de génération d'une rampe de tension (16) comprenant, en parallèle, au moins trois condensateurs sélectionnables (CrampHP1, CrampLP1, CrampLP2) en fonction de la valeur d'une tension d'alimentation (VDD) de l'alimentation à découpage.

**11.** Alimentation selon la revendication 10, dans lequel le circuit de commande est un circuit générateur de signaux de commande adaptés à sélectionner ou non lesdits au moins trois condensateurs sélectionnables (CrampHP1, CrampLP1, CrampLP2) .

**12.** Alimentation selon l'une quelconque des revendications 1 à 6, dans lequel lesdits au moins trois condensateurs (CrampHP1, CrampLP1, CrampLP2) sélectionnables sont sélectionnables par l'intermédiaire d'interrupteurs (164HP, 164LP1, 164LP2).

# Fig. 1

Vin → SMPS → Vout

1

# Fig. 2

1

START  12  GP  Vin

13  11P

CMD

14  Coil  Vout

Vout  Vout

Vref  Vramp  DPulse  GN  11N  S  Cext

Vbg  REF  Ramp Gen  RST_RAMP

15  VDD  16  VSS

10

# Fig. 3

# Fig. 4

# Fig. 5

Europäisches
Patentamt

European
Patent Office

Office européen
des brevets

**RAPPORT DE RECHERCHE EUROPEENNE**

Numéro de la demande

EP 20 18 6613

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/280556 A1 (BARI SYED [US] ET AL) 1 octobre 2015 (2015-10-01) * figure 4 * ----- | 1-12 | INV. H02M3/156 |
| X | US 2010/320991 A1 (YOSHINO TAKAHIRO [JP]) 23 décembre 2010 (2010-12-23) * figure 3 * * alinéa [0056] * ----- | 1 | |
| A | US 2014/071717 A1 (MURATA KAZUHIRO [JP]) 13 mars 2014 (2014-03-13) * figure 5 * * alinéa [0010] * ----- | 3,5 | |

| DOMAINES TECHNIQUES RECHERCHES (IPC) |
|---|
| H02M |

Le présent rapport a été établi pour toutes les revendications

| Lieu de la recherche | Date d'achèvement de la recherche | Examinateur |
|---|---|---|
| La Haye | 17 novembre 2020 | Gotzig, Bernhard |

## ANNEXE AU RAPPORT DE RECHERCHE EUROPEENNE
## RELATIF A LA DEMANDE DE BREVET EUROPEEN NO.

EP 20 18 6613

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-11-2020

| Document brevet cité au rapport de recherche | Date de publication | Membre(s) de la famille de brevet(s) | Date de publication |
|---|---|---|---|
| US 2015280556 A1 | 01-10-2015 | AUCUN | |
| US 2010320991 A1 | 23-12-2010 | JP 5347748 B2<br>JP 2011004517 A<br>US 2010320991 A1 | 20-11-2013<br>06-01-2011<br>23-12-2010 |
| US 2014071717 A1 | 13-03-2014 | US 2014071717 A1<br>WO 2012160588 A1 | 13-03-2014<br>29-11-2012 |

EPO FORM P0460

Pour tout renseignement concernant cette annexe : voir Journal Officiel de l'Office européen des brevets, No.12/82